# FASCICULE DE BREVET EUROPEEN

(11) **EP 4 408 675 B1**
(45) Date de publication et mention de la délivrance du brevet: **27.05.2026**
(21) Numéro de dépôt: 22782907.4
(22) Date de dépôt: 01.09.2022
(51) Int. Cl.: B60B 35/00, B60G 21/05, B60B 35/04

(54) **SUPPORT DE PLATINE PORTE-MOYEU ET VÉHICULE COMPORTANT UN TEL SUPPORT**
HALTERUNG EINER NABENTRÄGERPLATTE UND FAHRZEUG MIT SOLCH EINER HALTERUNG
SUPPORT OF A HUB CARRIER PLATE AND VEHICLE COMPRISING SUCH A SUPPORT

(30) Priorité: 28.09.2021 FR 2110189
(43) Date de publication de la demande: 07.08.2024
(73) Titulaire: Stellantis Auto SAS, 78300 Poissy (FR)
(72) Inventeur: NAGARAJ, Sundharesh, Thoraipakkam, CHENNAI 600097 (IN); SUBRAMANIAN, Balasaravanakumar, Thoraipakkam, CHENNAI 600097 (IN); RANGARAJ, Radhakrishnan, Thoraipakkam, CHENNAI 600097 (IN)
(74) Mandataire: BCIP
(86) Numéro de dépôt international: PCT/FR2022/051654
(87) Numéro de publication internationale: WO 2023/052698

(56) Documents cités:
- EP-A1- 2 669 103
- FR-A1- 2 934 813
- FR-A1- 3 012 372
- FR-B1- 3 012 372

## Description

La présente invention concerne un support de platine porte-moyeu d'un essieu à traverse déformable.

La présente invention concerne plus particulièrement un tel support de platine porte-moyeu qui est adapté pour être solidarisé indifféremment sur un des deux bras de suspension longitudinaux d'un essieu à traverse déformable.

Le document FR-B1-3012372 décrit un essieu arrière d'un véhicule automobile à des deux bras de suspension longitudinaux dont chaque bras comporte un support pour une platine porte-moyeu qui sont identiques, donc pouvant être monté indifféremment sur chacun des deux bras.

Mais le problème reste que lorsque le véhicule présente différentes largeurs de voies, l'ensemble constitué du support et d'une platine porte-moyeu doit être redimensionné, augmentant la diversité sur ces pièces, son prix de fabrication et pose des problèmes logistiques.

Le dispositif selon l'invention permet de remédier à ces inconvénients.

Il comporte en effet, selon l'invention, un support de platine porte-moyeu adapté pour être solidarisé indifféremment sur un des deux bras de suspension longitudinaux d'un essieu à traverse déformable, tel que ledit support comporte deux premières parties qui comportent un même profil de connexion adapté pour être solidarisées au choix sur un même emplacement de chacun des deux bras de suspension longitudinaux, chacune des deux premières parties du support étant adaptée pour positionner à deux distances différentes la platine porte-moyeu dudit bras de suspension longitudinal.

Selon une première caractéristique de l'invention, le support comporte deux secondes parties adaptées pour recevoir la platine porte-moyeu, une première ou une seconde desdites deux secondes parties étant utilisées pour recevoir ladite platine porte-moyeu en fonction respectivement d'une première ou d'une seconde desdites deux premières parties qui est solidarisée sur un des deux bras de suspension longitudinaux.

Selon une seconde caractéristique de l'invention, la première desdites premières parties du support juxtapose la première desdites secondes parties du support, la seconde desdites premières parties du support juxtaposant la seconde desdites secondes parties du support.

Selon une troisième caractéristique de l'invention, le support est formé par une série d'opérations d'emboutissages et de détourages à partir d'une unique plaque en tôle.

Selon une quatrième caractéristique de l'invention, le support présente une forme en U, les deux premières parties dudit support étant formées au niveau des extrémités libres des deux branches du U, la première desdites deux secondes parties du support étant formée par un premier bord latéral du U, la seconde desdites deux secondes parties du support étant formée par le second bord latéral opposé du U.

La présente invention concerne aussi un essieu à traverse déformable comportant deux bras de suspension longitudinaux, chaque bras de suspension longitudinal comportant un ensemble constitué d'un tel support et d'une platine porte-moyeu.

Les deux platines porte-moyeu sont solidarisées par soudure sur, respectivement, chacune des deux secondes parties du support.

Les deux ensembles constitués chacun d'un support et d'une platine porte-moyeu sont solidarisés par soudure sur, respectivement, chacun des deux bras de suspension longitudinaux.

La présente invention concerne enfin un véhicule qui comporte un train arrière pour véhicule automobile équipé d'un tel essieu à traverse déformable.

Les dessins annexés illustrent l'invention :

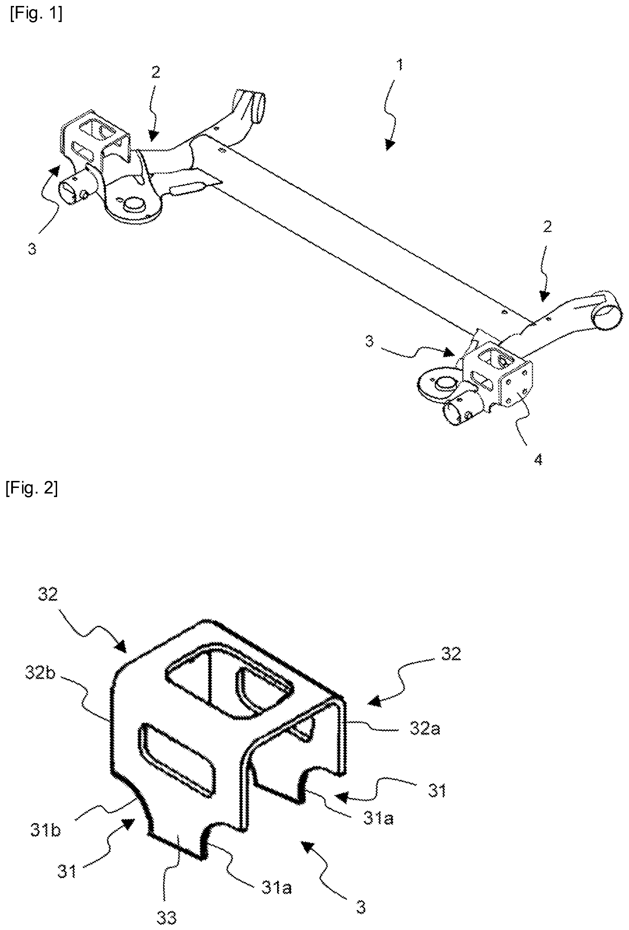

[Fig. 1] représente une vue en perspective d'un essieu arrière d'un véhicule à traverse déformable selon l'invention.
[Fig. 2] représente une vue en perspective d'un support pour une platine porte-moyeu de l'essieu arrière selon l'invention.
[Fig. 3] représente une vue latérale du support selon l'invention.

En référence à ces dessins, est représenté un essieu arrière d'un véhicule à traverse déformable 1 qui comporte des deux bras de suspension longitudinaux 2, chaque bras de suspension longitudinal 2 comportant un ensemble constitué d'un support 3 sur lequel est solidarisée une platine porte-moyeu 4.

Le support 3 de la platine porte-moyeu 4 est adapté pour être solidarisé indifféremment sur un des deux bras de suspension longitudinaux 2, avec deux premières parties 31 qui comportent un même profil de connexion adapté pour être solidarisées au choix sur un même emplacement de chacun des deux bras de suspension longitudinaux 2 et deux secondes parties 32 adaptées pour recevoir la platine porte-moyeu 4.

Une première 32a ou la seconde 32b des deux secondes parties 32 est utilisée pour recevoir la platine porte-moyeu 4 en fonction, respectivement, d'une première 31a ou d'une seconde 31b des deux premières parties 31 qui est solidarisée sur un des deux bras de suspension longitudinaux 2.

Suivant que l'on choisisse de solidariser la première 31a ou la seconde 31b des deux premières parties 31 du support 3 sur un des deux bras de suspension longitudinaux 2, le porte-moyeu 4 est positionné à deux distances différentes du bras de suspension longitudinaux 2.

Cette différence de distance se retrouve sur les deux bras de suspension longitudinaux 2 suivant le choix de la premières 31a ou de la seconde 31b des deux premières parties 31 du support 3 pour les deux supports 3, donnant deux largeurs de voies pour le véhicule.

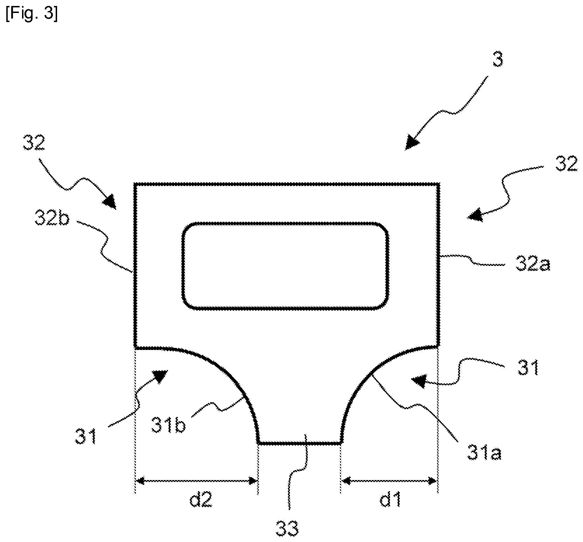

Cette dissymétrie du support 3 est illustrée dans la figure 3 avec une première distance d1 qui mesure la distance entre une extrémité de la première 31a des deux premières parties 31 du support 3 jusqu'à une partie centrale 33 du support 3 et une distance d2 qui mesure la distance entre une extrémité de la seconde 31b des deux premières parties 31 du support 3 jusqu'à la partie centrale 33 du support 3.

La différence entre les distances d1 et d2 représente la moitié de la variation de largeur de voie entre les deux montages possibles des deux supports 3 sur les deux bras de suspension longitudinaux 2.

Comme représenté sur ces figures, la première 31a des premières parties 31 du support 3 juxtapose la première 32a des secondes parties 32 du support et la seconde 31b des premières parties 31 du support 3 juxtapose la seconde 32b des secondes parties 32 du support 3.

Le support présente une forme en U et est formé par une série d'opérations d'emboutissages et de détourages à partir d'une unique plaque en tôle.

Les deux premières parties 31 du support 3 sont formées au niveau des extrémités libres des deux branches du U et la première 32a des deux secondes parties 32 du support 3 est formée par un premier bord latéral du U, la seconde 32b des deux secondes parties 32 du support 3 étant formée par le second bord latéral opposé du U.

Les deux platines porte-moyeu 4 sont solidarisées par soudure sur respectivement chacune des deux secondes parties 32 du support 3.

Les deux ensembles constitués chacun d'un support 3 et d'une platine porte-moyeu 4 sont solidarisés par soudure sur respectivement chacune des deux bras de suspension longitudinaux 2.

## Revendications

1. Support (3) de platine porte-moyeu (4) adapté pour être solidarisé indifféremment sur un des deux bras de suspension longitudinaux (2) d'un essieu à traverse déformable (1), ledit support (3) comportant deux premières parties (31) qui comportent un même profil de connexion adapté pour être solidarisées au choix sur un même emplacement de chacun des deux bras de suspension longitudinaux (2), **caractérisé en ce que** les premières parties (31) du support (3) sont asymétriques et présentent une première distance (d1) entre une extrémité de la première desdites premières parties (31a) et une partie centrale (33) du support (3), et une seconde distance (d2) entre une extrémité de la seconde desdites premières parties (31b) et la partie centrale (33), lesdites deux distances (d1, d2) étant différentes.

2. Support (3) selon la revendication 1, **caractérisé en ce qu'**il comporte deux secondes parties (32) adaptées pour recevoir la platine porte-moyeu (4), une première (32a) ou une seconde (32b) desdites deux secondes parties (32) du support (3) étant utilisées pour recevoir ladite platine porte-moyeu (4) en fonction respectivement d'une première (31a) ou d'une seconde (31b) desdites deux premières parties (31) du support (3) qui est solidarisée sur un des deux bras de suspension longitudinaux (2).

3. Support (3) selon la revendication 2, **caractérisé en ce que** la première (31a) desdites premières parties (31) du support (3) juxtapose la première (32a) desdites secondes parties (32) du support (3), la seconde (31b) desdites premières parties (31) du support (3) juxtaposant la seconde (32b) desdites secondes parties (32) du support (3).

4. Support (3) selon l'une quelconque des revendications précédentes, **caractérisé en ce qu'**il est formé par une série d'opérations d'emboutissages et de détourages à partir d'une unique plaque en tôle.

5. Support (3) selon l'une quelconque des revendications précédentes, **caractérisé en ce que** le support présente une forme en U, les deux premières parties (31) dudit support (3) étant formées au niveau des extrémités libres des deux branches du U.

6. Support (3) selon la revendication précédente, **caractérisé en ce que** la première (32a) desdites deux secondes parties (32) du support (3) est formée par un premier bord latéral du U, la seconde (32b) desdites deux secondes parties (32) du support (3) étant formée par le second bord latéral opposé du U.

7. Essieu à traverse déformable (1) comportant des deux bras de suspension longitudinaux (2), chaque bras de suspension longitudinal (2) comportant un ensemble constitué d'un support (3) selon l'une quelconque des revendications précédentes et d'une platine porte-moyeu (4).

8. Essieu (1) selon la revendication précédente, **caractérisé en ce que** les deux platines porte-moyeu (4) sont solidarisées par soudure sur, respectivement, chacune des deux secondes parties (32) du support (3).

9. Essieu (1) selon l'une des revendications 7 ou 8, **caractérisé en ce que** les deux ensembles constitués chacun d'un support (3) et d'une platine porte-moyeu (4) sont solidarisés par soudure sur, respectivement, chacun des deux bras de suspension longitudinaux (2).

10. Véhicule comportant un train arrière pour véhicule automobile équipé d'un essieu à traverse déformable (1) selon l'une quelconque des revendications 7 à 9.

## Patentansprüche

1. Halterung (3) für eine Nabenträgerplatte (4), die geeignet ist, um unterschiedslos an einem der beiden Längsaufhängungsarme (2) einer verformbaren Querachse (1) befestigt zu werden, wobei die Halterung (3) zwei erste Teile (31) aufweist, die dasselbe Verbindungsprofil aufweisen, das geeignet ist, um wahlweise an einer gleichen Stelle an jedem der beiden Längsaufhängungsarme (2) befestigt zu werden, **dadurch gekennzeichnet, dass** die ersten Teile (31) der Halterung (3) asymmetrisch sind und einen ersten Abstand (d1) zwischen einem Ende des ersten der ersten Teile (31a) und einem mittleren Teil aufweisen (33) des Halters (3) und einen zweiten Abstand (D2) zwischen einem Ende des zweiten der ersten Abschnitte (31b) und dem Mittelabschnitt (33), wobei die beiden Abstände (D1, D2) unterschiedlich sind.

2. Halter (3) nach Anspruch 1, **dadurch gekennzeichnet, dass** er zwei zweite Teile (32) aufweist, die zur Aufnahme der Nabenträgerplatte (4) geeignet sind, wobei ein erster (32a) oder ein zweiter (32b) der beiden zweiten Teile (32) des Halters (3) zur Aufnahme der Nabenträgerplatte (4) in Abhängigkeit von einem ersten (31a) bzw. einem zweiten (31b) der beiden ersten Teile (31) des Halters (3) verwendet wird, der an einem der beiden Längsaufhängungsarme (2) befestigt ist.

3. Träger (3) nach Anspruch 2, **dadurch gekennzeichnet, dass** der erste (31a) der ersten Abschnitte (31) des Trägers (3) den ersten (32a) der zweiten Abschnitte (32) des Trägers (3) nebeneinander anordnet, wobei der zweite (31b) der ersten Abschnitte (31) des Trägers (3) den zweiten (32b) der zweiten Abschnitte (32) des Trägers (3) nebeneinander anordnet.

4. Halterung (3) nach einem der vorhergehenden Ansprüche, **dadurch gekennzeichnet, dass** sie durch eine Reihe von Einstanz- und Ausschneidevorgängen aus einer einzigen Blechplatte gebildet ist.

5. Halter (3) nach einem der vorhergehenden Ansprüche, **dadurch gekennzeichnet, dass** der Halter U-förmig ist, wobei die beiden ersten Teile (31) des Halters (3) an den freien Enden der beiden U-Schenkel ausgebildet sind.

6. Träger (3) nach dem vorhergehenden Anspruch, **dadurch gekennzeichnet, dass** der erste (32a) der beiden zweiten Abschnitte (32) des Trägers (3) durch eine erste Seitenkante des U gebildet ist, wobei der zweite (32b) der beiden zweiten Abschnitte (32) des Trägers (3) durch die gegenüberliegende zweite Seitenkante des U gebildet ist.

7. Verformbare Traversenachse (1) mit zwei Längslenkern (2), wobei jeder Längslenker (2) eine Anordnung aufweist, die aus einem Träger (3) nach einem der vorhergehenden Ansprüche und einer Nabenträgerplatte (4) besteht.

8. Achse (1) nach dem vorhergehenden Anspruch, **dadurch gekennzeichnet, dass** die beiden Nabenträgerplatinen (4) durch Verschweißen mit jeweils jedem der beiden zweiten Teile (32) des Trägers (3) verbunden sind.

9. Achse (1) nach einem der Ansprüche 7 oder 8, **dadurch gekennzeichnet, dass** die beiden Einheiten, die jeweils aus einem Träger (3) und einer Nabenplatte (4) bestehen, durch Schweißen an jeweils jedem der beiden Längsaufhängungsarme (2) miteinander verbunden sind.

10. Fahrzeug mit einem Hinterradsatz für ein Kraftfahrzeug, der mit einer verformbaren Querachse (1) nach einem der Ansprüche 7 bis 9 ausgestattet ist.

## Claims

1. Support (3) for a hub-gate plate (4) adapted to be secured equally well to one of the two longitudinal suspension arms (2) of an axle with a deformable cross-member (1), said support (3) comprising two first parts (31) which comprise the same connection profile adapted to be secured as desired on the same location of each of the two longitudinal suspension arms (2), wherein the first parts (31) of the support (3) are asymmetrical and have a first distance (d 1) between an end of the first of said first parts (31 a) and a central part (33) of the support (3), and a second distance (d 2) between an end of the second of said first parts (31 b) and the central part (33), said two distances (d 1, d 2) being different.

2. Support (3) according to claim 1, **characterised in that** it comprises two second parts (32) adapted to receive the hub-gate plate (4), a first (32a) or a second (32b) of said two second parts (32) of the support (3) being used to receive said hub-gate plate (4) as a function respectively of a first (31a) or a second (31b) of said two first parts (31) of the support (3) which is secured to one of the two longitudinal suspension arms (2).

3. Support (3) according to claim 2, **characterised in that** the first (31a) of said first parts (31) of the support (3) juxtaposes the first (32a) of said second parts (32) of the support (3), the second (31b) of said first parts (31) of the support (3) juxtaposing the second (32b) of said second parts (32) of the support (3).

4. Support (3) according to any one of the previous claims, **characterised in that** it is made up of a series of tasks of stampings and trims from a single sheet metal plate.

5. Support (3) according to any one of the previous claims, wherein the support has a U-shape, the first two parts (31) of said support (3) being formed at the level of the free ends of the two branches of the U.

6. Support (3) according to previous claim 1, wherein the first (32a) of said two second parts (32) of the support (3) is formed by a first lateral edge of the U, the second (32b) of said two second parts (32) of the support (3) being formed by the second opposite lateral edge of the U.

7. Axle with a deformable cross-member (1) comprising two longitudinal suspension arms (2), each longitudinal suspension arm (2) comprising an assembly consisting of a support (3) according to any one of the previous claims and a gate-hub plate (4).

8. Axle (1) according to previous claim 1, wherein the two gate-hub plates (4) are secured by welding to, respectively, each of the two second parts (32) of the support (3).

9. Axle (1) according to one of Claims 7 or 8, **characterised in that** the two assemblies each consisting of a support (3) and a hub-gate plate (4) are secured by welding to, respectively, each of the two longitudinal suspension arms (2).

10. Vehicle comprising a rear axle for a motor vehicle equipped with an axle with a deformable cross-member (1) according to any one of claims 7 to 9.
